# EUROPÄISCHE PATENTANMELDUNG

(11) **EP 4 438 864 A1**
(43) Veröffentlichungstag der Anmeldung: **02.10.2024**
(21) Anmeldenummer: 24153356.1
(22) Anmeldetag: 23.01.2024
(51) Int. Cl.: F01M 11/00, F02F 11/00, F16J 15/06, F16L 23/032

(54) **VORRICHTUNG, FLUIDFÜHRENDE EINRICHTUNG MIT ZUMINDEST EINER SOLCHEN VORRICHTUNG UND EINRICHTUNG EINES FAHRZEUGS, INSBESONDERE EIN ÖLMODUL ODER EIN FLUIDMODUL, MIT ZUMINDEST EINER SOLCHEN VORRICHTUNG**

(30) Priorität: 28.03.2023 DE 102023202824
(71) Anmelder: MAHLE International GmbH, 70376 Stuttgart (DE)
(72) Erfinder: Wolf, Christian, 7442 Hammerteich (Lockenhaus) (AT)

(57) **Zusammenfassung**

Die vorliegende Erfindung betrifft eine Vorrichtung (1) mit einem Basisbauteil (2) und einem Anbauteil (6) zum Anbauen an das Basisbauteil (2). Das Anbauteil (6) weist zumindest einen erhabenen Abstützvorsprung (10) auf und ist in einem zusammengebauten Zustand (12) der Vorrichtung (1) anhand dem zumindest einen Abstützvorsprung (10) an dem Basisbauteil (2) abgestützt. Dabei ist das Anbauteil (6) anhand einem Spannmittel (14) der Vorrichtung (1) so an dem Basisbauteil (2) festgespannt, dass der zumindest eine Abstützvorsprung (10) durch elastische Verformung gestaucht ist. Dadurch kann ein zwischen dem Anbauteil (6) und dem Basisbauteil (2) angeordnetes, zum Abdichten eines Fluidkanalsystems der Vorrichtung (1) eingesetztes Dichtelement (11) der Vorrichtung (1) auch bei Tieftemperaturen seine Dichtfunktion gewährleisten. Die Erfindung betrifft insbesondere eine fluidführende Einrichtung mit zumindest einer solchen Vorrichtung (1) sowie weiter insbesondere eine Einrichtung (21) eines Fahrzeugs, insbesondere ein Ölmodul oder ein Fluidmodul, mit zumindest einer solchen Vorrichtung (1).

## Beschreibung

Die Erfindung betrifft eine Vorrichtung gemäß dem Gegenstand von Anspruch 1, insbesondere eine zumindest eine solche Vorrichtung aufweisende fluidführende Einrichtung sowie weiter insbesondere eine zumindest eine solche Vorrichtung aufweisende Einrichtung eines Fahrzeugs, insbesondere ein Ölmodul oder ein Fluidmodul.

Die eingangs genannte Vorrichtung besitzt typischerweise ein Basisbauteil, das von zumindest einem von einem Fluid durchströmbaren Fluidkanal durchsetzt ist, und ein Anbauteil, das von zumindest einem von dem Fluid durchströmbaren Gegenfluidkanal durchsetzt ist. Entsprechende Vorrichtungen finden sich in allen Gebieten der Technik, jedoch stehen hier insbesondere fluidführende Einrichtungen von Fahrzeugen im Fokus.

In zusammengebautem Zustand der Vorrichtung sind das Anbauteil und das Basisbauteil so aneinander fixiert, dass der zumindest eine Fluidkanal und der zumindest eine Gegenfluidkanal miteinander fluidisch kommunizierend verbunden sind und ein Fluidkanalsystem bilden, durch das im Betrieb der Vorrichtung ein Fluid strömt, beispielsweise Kühlflüssigkeit, Öl oder Wasser oder dergleichen. Um Leckagen und dadurch verursachte, unerwünschte Verschmutzungen zu vermeiden, wird üblicherweise ein elastisches Dichtelement zwischen dem Basisbauteil und dem Anbauteil angeordnet, anhand welchem der Fluidkanal und der Gegenfluidkanal gegenüber einer die Vorrichtung umgebenden Atmosphäre fluiddicht abgedichtet sind.

Entsprechende elastische Dichtelemente besitzen in einem relativ weiten Temperaturfenster von beispielsweise -40°C bis +100°C relativ konstante Materialeigenschaften, die eine optimale Dichtfunktion gewährleisten. Hierzu zählen insbesondere eine gute Elastizität sowie gute dynamische Eigenschaften. Außerhalb des Temperaturfensters ändern sich die Materialeigenschaften jedoch relativ markant. Insbesondere bei Tieftemperaturen von -40°C und weniger können sich die Elastizität sowie die dynamischen Eigenschaften sprunghaft verschlechtern. Weiterhin führen die Tieftemperaturen zu einer gewissen thermischen Schrumpfung des Dichtelements. Infolgedessen verliert das Dichtelement nach und nach seine Dichtfunktion, was zu unerwünschten Leckagen führt.

Vorrichtungen der eingangs genannten Art sind daher auf Anwendungsgebiete beschränkt, bei denen keine Tieftemperaturen auftreten.

Die Aufgabe der Erfindung liegt darin, eine verbesserte oder zumindest eine andere Ausführungsform einer entsprechenden Vorrichtung anzugeben. Insbesondere soll eine zumindest eine solche Vorrichtung aufweisende fluidführende Einrichtung sowie eine zumindest eine solche Vorrichtung aufweisende Einrichtung eines Fahrzeugs bereitgestellt werden.

Bei der vorliegenden Erfindung wird diese Aufgabe insbesondere durch die Gegenstände der unabhängigen Ansprüche gelöst. Vorteilhafte Ausführungsformen sind Gegenstand der abhängigen Ansprüche und der Beschreibung.

Die Erfindung hat erkannt, dass die bei einer solchen Vorrichtung bei Tieftemperaturen auftretenden Leckagen verhindert werden können, indem man ein Anbauteil der Vorrichtung elastisch auf ein Basisbauteil der Vorrichtung vorspannt.

Demnach wird eine Vorrichtung, insbesondere eine Einrichtung eines Fahrzeugs, insbesondere ein Ölmodul oder ein Fluidmodul, vorgeschlagen, die ein eine Bestückungsfläche aufweisendes Basisbauteil, das von zumindest einem von Fluid durchströmbaren Fluidkanal durchsetzt ist, der unter Ausbildung einer Fluidkanalöffnung an der Bestückungsfläche ausmündet, sowie ein elastische Materialeigenschaften aufweisendes Anbauteil zum Anbauen an das Basisbauteil aufweist. Das Anbauteil ist von zumindest einem vom Fluid durchströmbaren Gegenfluidkanal durchsetzt und weist eine Gegenbestückungsfläche, an welcher der zumindest eine Gegenfluidkanal unter Ausbildung einer Gegenfluidkanalöffnung ausmündet, sowie zumindest einen über die Gegenbestückungsfläche erhabenen Abstützvorsprung auf. Außerdem weist die Vorrichtung zumindest ein elastisches Dichtelement auf, das an der Bestückungsfläche oder der Gegenbestückungsfläche angeordnet ist und die Fluidkanalöffnung oder die Gegenfluidkanalöffnung umläuft. In einem zusammengebauten Zustand der Vorrichtung ist vorgesehen, dass das Anbauteil sich anhand dem zumindest einen Abstützvorsprung an der Bestückungsfläche des Basisbauteils abstützt, die Fluidkanalöffnung und die Gegenfluidkanalöffnung einander gegenüberliegen, der zumindest eine Fluidkanal mit dem zumindest einen Gegenfluidkanal fluidisch kommunizierend verbunden ist sowie das zumindest eine Dichtelement den Fluidkanal sowie den Gegenfluidkanal gegenüber einer die Vorrichtung umgebenden Atmosphäre abdichtend zwischen dem Basisbauteil und dem Anbauteil eingeklemmt ist. Wesentlich ist, dass in dem zusammengebauten Zustand der Vorrichtung das Anbauteil anhand einem Spannmittel der Vorrichtung an dem Basisbauteil fixiert, bevorzugt festgespannt, ist, in der Art, dass der zumindest eine Abstützvorsprung durch elastische Verformung gestaucht ist.

Das Anbauteil ist dadurch elastisch auf das Basisbauteil vorgespannt. Die Erfindung hat erkannt, dass die Vorrichtung dadurch überrascherderweise auch bei Tieftemperaturen kleiner gleich -40°C eingesetzt werden kann, ohne dass das verwendete Dichtelement versagt. Dies begründet sich darin, dass die erfindungsgemäße Vorrichtung durch eine elastische Rückstellung des vorher durch elastische Verformung gestauchten zumindest einen Abstützvorsprungs eine Relativbewegung zwischen Basisbauteil und Anbauteil verhindern und thermische Schrumpfung sowie sich verschlechternde Materialeigenschaften des zumindest einen Dichtelements aufgrund der Tieftemperaturen ausgleichen kann. Relevant ist insbesondere auch die elastische Verformung und die damit verbundene Vorspannung des Anbauteils am Basisbauteil. Zweckmäßig ist ferner, wenn der Abstützvorsprung sich über die Zeit möglichst wenig deformiert, um die erzielte Vorspannung des Anbauteils möglichst lange zu erhalten. Dadurch ist der zumindest eine Fluidkanal und der zumindest eine Gegenfluidkanal auch bei Tieftemperaturen kleiner gleich -40°C und beispielsweise Betriebsdrücken von bis zu 15 bar zuverlässig gegenüber der Atmosphäre fluiddicht abgedichtet.

Die Erfindung versteht unter dem Begriff "Stauchung" bzw. "gestaucht" zweckmäßigerweise eine Längenänderung, insbesondere eine Verkürzung oder Deformation.

Die durch elastische Verformung realisierte Stauchung des zumindest einen Abstützvorsprungs ist im Sinne der Erfindung zweckmäßigerweise reversibel, insbesondere vollständig reversibel oder zumindest im Wesentlichen vollständig reversibel. Das bedeutet, dass der zumindest eine Abstützvorsprung durch das Festspannen des Anbauteils am Basisbauteil anhand dem Spannmittel rein elastisch und insbesondere nicht plastisch verformt ist. Dadurch kann der zumindest eine Abstützvorsprung sich, wenn die Vorrichtung Tieftemperaturen ausgesetzt ist, um den Betrag, um den das Dichtelement bei diesen Tieftemperaturen thermisch schrumpft, elastisch zurückstellen.

Das zumindest eine Dichtelement ist zweckmäßigerweise integral oder stoffschlüssig an dem Basisbauteil oder dem Anbauteil angeordnet, beispielsweise verklebt, angeschweißt, angespritzt oder dergleichen. Es könnte jedoch auch lose in eine an dem Basisbauteil oder an dem Anbauteil eigens für das Dichtelement ausgebildete Nut eingelegt sein.

Das Spannmittel kann insbesondere durch eine Befestigungsschraube oder dergleichen realisiert sein.

Das Anbauteil könnte prinzipiell einen mit dem zumindest einen Abstützvorsprung verbundenen Verformungsbereich besitzen, der in dem zusammengebauten Zustand der Vorrichtung dem Basisbauteil zugewandt und, so wie der zumindest eine Abstützvorsprung, infolge der Montage des Anbauteils am Basisbauteil anhand des Spannmittels durch elastische Verformung gestaucht ist.

Zweckmäßigerweise kann vorgesehen sein, dass der zumindest eine Abstützvorsprung an der Gegenbestückungsfläche angeordnet ist. Bevorzugt ist es, wenn der zumindest eine Abstützvorsprung dabei integral mit dem Anbauteil ausgeführt ist. Zweckmäßigerweise könnte auch vorgesehen sein, dass der zumindest eine Abstützvorsprung mit dem Anbauteil urgeformt ist. Denkbar wäre weiterhin, dass der zumindest eine Abstützvorsprung als separates Bauteil bereitgestellt und an die Gegenbestückungsfläche angeformt oder angeklebt ist.

Weiterhin ist es zweckmäßig, wenn die durch elastische Verformung bewirkte Stauchung des zumindest einen Abstützvorsprungs ausschließlich oder im Wesentlichen in einer senkrecht auf der Gegenbestückungsfläche stehenden Hauptverformungsrichtung erfolgt. Versuche haben gezeigt, dass dadurch eine Relativbewegung in dieser Hauptverformungsrichtung zwischen dem Basisbauteil und dem Anbauteil und/oder eine thermische Schrumpfung sowie sich verschlechternde Materialeigenschaften des zumindest einen Dichtelements aufgrund der Tieftemperaturen besonders effizient verhindert bzw. ausgeglichen werden können.

Weiter zweckmäßigerweise kann vorgesehen sein, dass der zumindest eine Abstützvorsprung die Gegenfluidkanalöffnung vollständig oder zumindest abschnittweise umläuft. Dadurch kann das in der Regel direkt an der Gegenfluidkanalöffnung angeordnete Dichtelement optimal unterstützt werden.

Zweckmäßigerweise kann vorgesehen sein, dass der zumindest eine Abstützvorsprung einen langerstreckten und/oder stegartigen Schmalkörper aufweist, der sich entlang einer Erstreckungsbahn über die Gegenbestückungsfläche erstreckt. Zweckmäßigerweise besitzt der Schmalkörper dabei in seiner Erstreckungsrichtung entlang der Erstreckungsbahn eine Erstreckungslänge, die größer oder gleich ist, wie eine quer zur Erstreckungslänge orientierte Schmalkörperbreite des Schmalkörpers und/oder eine zur Erstreckungslänge und zur Schmalkörperbreite quer orientierte Schmalkörperhöhe des Schmalkörpers.

Die Erstreckungsbahn kann gerade und/oder gebogen ausgeführt sein. Insbesondere kann die Erstreckungsbahn einer durch die Gegenfluidkanalöffnung vorgegebenen Öffnungskontur folgen, insbesondere wenigstens abschnittsweise, sodass der zumindest einen Abstützvorsprung die Gegenfluidkanalöffnung zumindest abschnittweise umläuft.

Weiter zweckmäßigerweise kann vorgesehen sein, dass der Schmalkörper in einer senkrecht auf der Gegenbestückungsfläche stehenden Höhenrichtung über die Gegenbestückungsfläche erhaben ist und in einem unverformten Zustand oder in dem elastisch verformten Zustand in der Höhenrichtung eine Höhe aufweist, die größer 0mm kleiner gleich 1 mm ist. Bevorzugt kann vorgesehen sein, dass die Höhe des Schmalkörpers größer 0mm kleiner gleich 0,5mm, weiter bevorzugt größer 0mm kleiner gleich 0,2mm noch weiter bevorzugt exakt 0,2mm hoch ist. Eine entsprechende Höhe des Schmalkörpers kann mit relativ einfachen Mittel gefertigt werden. Außerdem haben Versuche gezeigt, dass bei entsprechenden Höhen des Schmalkörpers eine ausreichende elastische Stauchung erzielbar ist.

Zweckmäßigerweise kann vorgesehen sein, dass das zumindest eine Dichtelement zwischen dem zumindest einen Abstützvorsprung und der Gegenfluidkanalöffnung angeordnet ist. Alternativ kann vorgesehen sein, dass der zumindest eine Abstützvorsprung zwischen dem zumindest einen Dichtelement und der Gegenfluidkanalöffnung angeordnet ist. Das zumindest eine Dichtelement sowie der zumindest eine Abstützvorsprung können dabei berührend aneinander anliegen. Dadurch sind das zumindest eine Dichtelement sowie der zumindest eine Abstützvorsprung in direkter Nachbarschaft zueinander angeordnet, wodurch ein thermisches Schrumpfen des Dichtelements optimal ausgeglichen werden kann.

Weiter zweckmäßigerweise kann vorgesehen sein, dass das Anbauteil und/oder der zumindest eine Abstützvorsprung aus einem elastischen Material, insbesondere aus Kunststoff oder Aluminium, hergestellt ist/sind. Bei dem besagten Kunststoff kann es sich zweckmäßigerweise um einen Thermoplast handeln, beispielsweise Polyamid (PA), Polypropylen (PP) oder Polyoxymethylen (POM). Dieser kann Füllstoffe aufweisen oder frei von Füllstoffen sein. Füllstoffe sind vorliegend insbesondere Glasfasern und/oder Fasern mit einer geringen elektrischen Leitfähigkeit, was insbesondere in Bezug auf alternative Antriebe relevant sein kann. Dadurch kann die Vorrichtung kostengünstig und mit den für die beschriebene elastische Stauchung des Abstützvorsprungs günstigen Materialeigenschaften bereitgestellt werden.

Gemäß einem weiteren Grundgedanken der Erfindung ist eine fluidführende Einrichtung vorgesehen, die zumindest eine Vorrichtung gemäß der vorstehenden Beschreibung aufweist oder dieselbe bildet. Entsprechende, fluidführende Einrichtungen können dadurch auch bei Tieftemperaturen von kleiner -40°C und beispielsweise Betriebsdrücken von bis zu 15 bar verwendet werden, ohne das eine Leckage von Fluid zu befürchten ist.

Gemäß einem weiteren Grundgedanken der Erfindung wird eine Einrichtung eines Fahrzeugs, insbesondere ein Ölmodul oder ein Fluidmodul, vorgeschlagen, die zumindest eine Vorrichtung gemäß der vorstehenden Beschreibung aufweist oder dieselbe bildet. Wesentlich ist, dass das Basisbauteil der Vorrichtung eine Komponente eines Antriebs des Fahrzeugs und das Anbauteil der Vorrichtung eine Ölwanne des Fahrzeugs oder eine Fluidwanne des Fahrzeugs bildet. Dadurch kann ein entsprechendes Fahrzeug auch bei Tieftemperaturen von kleiner -40°C und beispielsweise Betriebsdrücken von bis zu 15 bar verwendet werden, ohne das eine Leckage von Öl oder Fluid zu befürchten ist. Weiterhin kann die Einrichtung, also insbesondere das Ölmodul oder das Fluidmodul, bei einem Verbrennungsmotor (ICE) oder bei alternativen Antrieben wie einem batterieelektrischen-Antrieb (BEV), einem Hybrid-Antrieb (HEV) oder einem Brennstoffzellen-Antrieb (FC) eingesetzt werden.

Gemäß einem weiteren, optionalen Grundgedanken der Erfindung kann zumindest eine Vorrichtung gemäß der vorstehenden Beschreibung vorgesehen sein, die in einem in einem Fahrzeugflüssigkeitskreislauf eingesetzten Kühlmodul eines Fahrzeugs oder in einem in einem Fahrzeugflüssigkeitskreislauf eingesetzten Flüssigkeitsausgleichsmodul eines Fahrzeugs oder in einem in einem Fahrzeugflüssigkeitskreislauf eingesetzten Filtermodul eines Fahrzeugs angeordnet ist und/oder verwendet wird.

Zusammenfassend bleibt festzuhalten: Die vorliegende Erfindung betrifft vorzugsweise eine Vorrichtung mit einem Basisbauteil und einem Anbauteil zum Anbauen an das Basisbauteil. Das Anbauteil weist zumindest einen erhabenen Abstützvorsprung auf und ist in einem zusammengebauten Zustand der Vorrichtung anhand dem zumindest einen Abstützvorsprung an dem Basisbauteil abgestützt. Dabei ist das Anbauteil anhand einem Spannmittel der Vorrichtung so an dem Basisbauteil festgespannt, dass der zumindest eine Abstützvorsprung durch elastische Verformung gestaucht ist. Dadurch kann ein zwischen dem Anbauteil und dem Basisbauteil angeordnetes, zum Abdichten eines Fluidkanalsystems der Vorrichtung eingesetztes Dichtelement der Vorrichtung auch bei Tieftemperaturen seine Dichtfunktion gewährleisten. Die Erfindung betrifft insbesondere eine fluidführende Einrichtung mit zumindest einer solchen Vorrichtung sowie weiter insbesondere eine Einrichtung eines Fahrzeugs, insbesondere ein Ölmodul oder ein Fluidmodul, mit zumindest einer solchen Vorrichtung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: in einer stark vereinfachten Schnittansicht eine Ausführungsform der erfindungsgemäßen Vorrichtung und
- Fig. 2: in einer perspektivischen Ansicht eine weitere Ausführungsform der erfindungsgemäßen Vorrichtung.

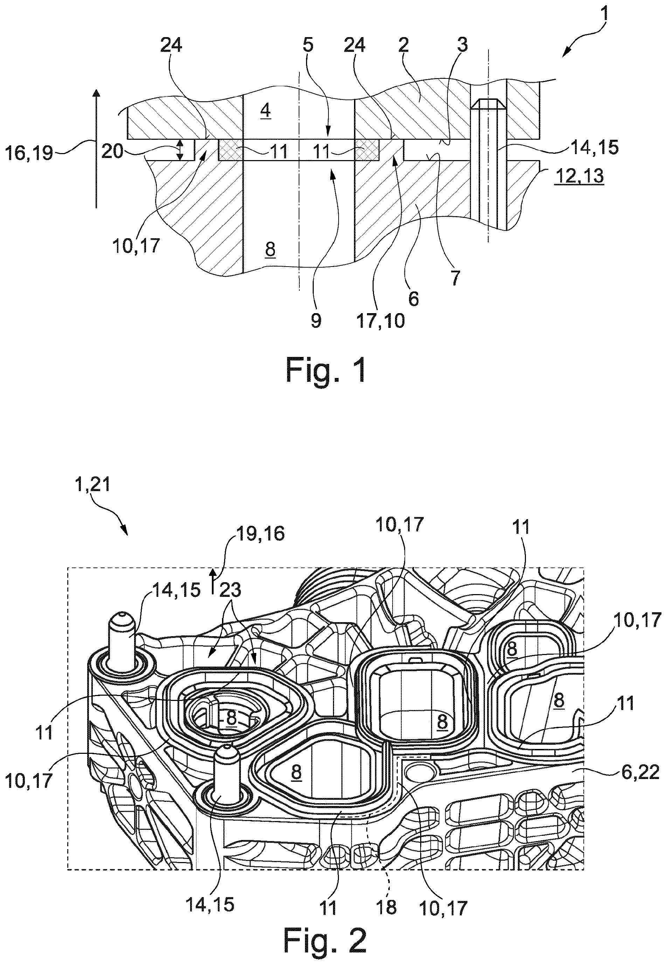

Die Fig. 1 und 2 zeigen bevorzugte Ausführungsformen einer im Gesamten mit der Bezugsziffer 1 bezeichneten Vorrichtung, die als fluidführende Einrichtung realisiert sein kann, beispielsweise als Ölmodul oder Fluidmodul 21 eines Fahrzeugs. Der Einfachheit halber sind in den beiden Ausführungsformen funktionsgleiche oder funktionsähnliche Komponenten mit den gleichen Bezugszeichen versehen. Eine erneute Beschreibung funktionsgleicher oder funktionsähnlicher Komponenten wird nachfolgend nicht vorgenommen, um Wiederholungen zu vermeiden.

Die Fig.1 zeigt, wie erwähnt, in einer stark vereinfachten Schnittansicht eine Ausführungsform der erfindungsgemäßen Vorrichtung 1. Sie weist ein Basisbauteil 2 und ein diesbezüglich separates Anbauteil 6 auf, das zum Anbauen an das Basisbauteil 2 eingerichtet und rein exemplarisch aus einem Kunststoff mit elastischen Materialeigenschaften hergestellt ist. Das Basisbauteil 2 kann prinzipiell aus einem beliebigen Material hergestellt sein, bevorzugt ist jedoch, wenn es eine im Vergleich mit dem Kunststoff des Anbauteils 6 hohe Festigkeit besitzt.

Das Basisbauteil 2 hat eine beispielsweise zumindest abschnittsweise eben ausgeführte Bestückungsfläche 3 zum Bestücken mit dem Anbauteil 6. Das Basisbauteil 2 ist außerdem von einem, von Fluid wie Kühlwasser oder Öl oder dergleichen durchströmbaren Fluidkanal 4 durchsetzt, der unter Ausbildung einer Fluidkanalöffnung 5 an der besagten Bestückungsfläche 3 ausmündet.

Das in Fig. 1 gezeigte Anbauteil 6 besitzt seinerseits eine beispielsweise zumindest abschnittsweise eben ausgeführte Gegenbestückungsfläche 7 und ist von einem, ebenfalls von Fluid wie Kühlwasser oder Öl oder dergleichen durchströmbaren Gegenfluidkanal 8 durchsetzt. Der Gegenfluidkanal 8 mündet unter Ausbildung einer Gegenfluidkanalöffnung 9 an der Gegenbestückungsfläche 7 aus. Außerdem besitzt das Anbauteil 6 vorliegend einen über die Gegenbestückungsfläche 7 erhabenen Abstützvorsprung 10.

Der Abstützvorsprung 10 ist gemäß Fig. 1 durch einen langerstreckten, stegartigen Schmalkörper 17 realisiert, der sich entlang einer lediglich in Fig. 2 illustrierten Erstreckungsbahn 18 an der Gegenbestückungsfläche 7 erstreckt. Dabei ist die Erstreckungsbahn 18 abschnittsweise gerade und/oder abschnittsweise gebogen ausgeführt und folgt der durch die Gegenfluidkanalöffnung 9 vorgegebenen Öffnungskontur, wodurch der Abstützvorsprung 10 die Gegenfluidkanalöffnung 9 abschnittsweise umläuft. Der Schmalkörper 17 der Abstützvorsprung 10 ist in einer senkrecht auf der Gegenbestückungsfläche 7 stehenden Höhenrichtung 19 über die Gegenbestückungsfläche 7 erhaben und weist in einem unverformten Zustand in der Höhenrichtung 19 eine Höhe 20, die weiter oben auch als Schmalkörperhöhe bezeichnet wurde, von exemplarisch größer 0mm kleiner gleich 1mm und bevorzugt exakt 0,2mm auf.

In Fig. 1 ist weiterhin zu erkennen, dass die Vorrichtung 1 ein elastisches Dichtelement 11 aufweist, das an der Gegenbestückungsfläche 7 des Anbauteil 6 zwischen dem Abstützvorsprung 10 und der Gegenfluidkanalöffnung 9 angeordnet ist und die Gegenfluidkanalöffnung 9 umläuft.

In einem zusammengebauten Zustand 12 der Vorrichtung 1, der lediglich in Fig. 1 dargestellt ist, kann man erkennen, dass das Anbauteil 6 sich anhand dem Abstützvorsprung 10 bzw. einer Kopffläche 24 des Schmalkörpers 17 an der Bestückungsfläche 3 des Basisbauteils 2 abstützt und dass die Fluidkanalöffnung 5 und die Gegenfluidkanalöffnung 9 einander fluchtend gegenüberliegen. Im zusammengebauten Zustand 12 ist weiterhin vorgesehen, dass der zumindest eine Fluidkanal 4 mit dem zumindest einen Gegenfluidkanal 8 fluidisch kommunizierend verbunden ist, wobei das zumindest eine Dichtelement 11 den Fluidkanal 4 sowie den Gegenfluidkanal 8 gegenüber einer die Vorrichtung 1 umgebenden Atmosphäre 13 abdichtend zwischen dem Basisbauteil 2 und dem Anbauteil 6 eingeklemmt ist. Dadurch kann Fluid wie Kühlwasser oder Öl oder dergleichen von dem Basisbauteil 2 zu dem Anbauteil 6 strömen, oder umgekehrt.

Wesentlich ist, dass in dem zusammengebauten Zustand 12 das Anbauteil 6 anhand einem Spannmittel 14 der Vorrichtung 1, das vorliegend exemplarisch durch eine Befestigungsschraube 15 realisiert ist, an dem Basisbauteil 2 festgespannt ist. Das Anbauteil 6 ist dabei derart an dem Basisbauteil 2 festgemacht oder fixiert, dass der Abstützvorsprung 10 durch eine vollständig reversible elastische Verformung ausschließlich oder im Wesentlichen in einer senkrecht auf der Gegenbestückungsfläche 7 stehenden Hauptverformungsrichtung 16, die vorliegend parallel zur Höhenrichtung 19 ist, gestaucht, d.h. insbesondere verkürzt, ist. Das Anbauteil 6 ist dadurch elastisch auf das Basisbauteil 2 vorgespannt. Dadurch kann, wenn die Vorrichtung 1 Tieftemperaturen von beispielsweise -40°C und weniger ausgesetzt ist und beispielsweise mit Betriebsdrücken von bis zu 15 bar arbeitet, durch eine elastische Rückstellung des gestauchten Abstützvorsprungs 20 bzw. des Schmalkörpers 17 eine Relativbewegung zwischen dem Basisbauteil 2 und dem Anbauteil 6 verhindert und/oder eine thermische Schrumpfung sowie sich verschlechternde Materialeigenschaften des Dichtelements 11 aufgrund der Tieftemperaturen kompensiert werden. Das hat den Vorteil, dass die Vorrichtung 1 auch bei Tieftemperaturen kleiner gleich -40°C und beispielsweise Betriebsdrücken von bis zu 15 bar eingesetzt werden kann, ohne dass das verwendete Dichtelement 11 versagt.

Die Fig. 2 zeigt, wie erwähnt, eine weitere Ausführungsform der erfindungsgemäßen Vorrichtung 1 in einer perspektivischen Ansicht. Die Vorrichtung 1 aus Fig. 2 entspricht im Wesentlichen der in Fig. 1 illustrierten Ausführungsform, jedoch ist zugunsten einer besseren Erkennbarkeit des Anbauteils 6 das Basisbauteil 2 der Vorrichtung 1 ausgeblendet. Das Anbauteil 6 ist vorliegend beispielsweise eine Ölwanne 22 oder eine Fluidwanne 22 eines nicht dargestellten Fahrzeugs. Im Unterschied zur in Fig. 1 dargestellten Ausführungsform besitzt die vorliegende Vorrichtung 1 insgesamt fünf Gegenfluidkanäle 8, die jeweils unter Ausbildung einer eigenen Gegenfluidkanalöffnung 9 an der Gegenbestückungsfläche 7 des Anbauteils 6 ausmünden. Das Anbauteil 6 besitzt vorliegend außerdem, beispielsweise aus Gründen des Leichtbaus, eine ganze Reihe von Ausnehmungen 23, die das Anbauteil 6 durchsetzen und insbesondere an der Gegenbestückungsfläche 7 ausmünden. In Fig. 2 kann man weiterhin erkennen, dass das Anbauteil 6 mehrere Abstützvorsprünge 10 mit jeweils einem Schmalkörper 17 aufweist, von denen jeweils einer oder mehrere einer der besagten Gegenfluidkanalöffnungen 9 zugeordnet ist. Die Schmalkörper 17 umlaufen eine jeweilige Gegenfluidkanalöffnungen 9 entlang einer in Fig. 2 durch eine gestrichelte Linie angedeuteten Erstreckungsbahn 18 abschnittsweise und sind in einer senkrecht auf der Gegenbestückungsfläche 7 stehenden Höhenrichtung 19 gegenüber der Gegenbestückungsfläche 7 erhaben.

## Patentansprüche

1. Vorrichtung (1), insbesondere eine Einrichtung eines Fahrzeugs, insbesondere ein Ölmodul oder ein Fluidmodul,
- mit einem eine Bestückungsfläche (3) aufweisenden Basisbauteil (2), das von zumindest einem Fluidkanal (4) durchsetzt ist, der unter Ausbildung einer Fluidkanalöffnung (5) an der Bestückungsfläche (3) ausmündet, sowie
- mit einem elastische Materialeigenschaften aufweisenden Anbauteil (6) zum Anbauen an das Basisbauteil (2), das von zumindest einem Gegenfluidkanal (8) durchsetzt ist und das eine Gegenbestückungsfläche (7) aufweist, an welcher der zumindest eine Gegenfluidkanal (8) unter Ausbildung einer Gegenfluidkanalöffnung (9) ausmündet,
- wobei das Anbauteil (6) zumindest einen über die Gegenbestückungsfläche (7) erhabenen Abstützvorsprung (10) aufweist,
- wobei die Vorrichtung (1) zumindest ein elastisches Dichtelement (11) aufweist, das an der Bestückungsfläche (3) oder der Gegenbestückungsfläche (7) angeordnet ist und die Fluidkanalöffnung (5) oder die Gegenfluidkanalöffnung (9) umläuft,
- wobei in einem zusammengebauten Zustand (12) der Vorrichtung (1) das Anbauteil (6) sich anhand dem zumindest einen Abstützvorsprung (10) an der Bestückungsfläche (3) des Basisbauteils (2) abstützt, die Fluidkanalöffnung (5) und die Gegenfluidkanalöffnung (9) einander gegenüberliegen, der zumindest eine Fluidkanal (4) mit dem zumindest einen Gegenfluidkanal (8) fluidisch kommunizierend verbunden ist sowie das zumindest eine Dichtelement (11) den Fluidkanal (4) sowie den Gegenfluidkanal (8) gegenüber einer die Vorrichtung (1) umgebenden Atmosphäre (13) abdichtend zwischen dem Basisbauteil (2) und dem Anbauteil (6) eingeklemmt ist,
- wobei weiterhin in dem zusammengebauten Zustand (12) der Vorrichtung (1) das Anbauteil (6) anhand einem Spannmittel (14) der Vorrichtung (1) an dem Basisbauteil (2) festgespannt ist, in der Art, dass der zumindest eine Abstützvorsprung (10) durch elastische Verformung gestaucht ist.

2. Vorrichtung (1) nach Anspruch 1,
**dadurch gekennzeichnet, dass**
der zumindest eine Abstützvorsprung (10) an der Gegenbestückungsfläche (7) angeordnet ist.

3. Vorrichtung (1) nach Anspruch 1 oder 2,
**dadurch gekennzeichnet, dass**
die durch elastische Verformung bewirkte Stauchung des zumindest einen Abstützvorsprungs (10) ausschließlich oder im Wesentlichen in einer senkrecht auf der Gegenbestückungsfläche (7) stehenden Hauptverformungsrichtung (16) erfolgt.

4. Vorrichtung (1) nach einem der vorhergehenden Ansprüche,
**dadurch gekennzeichnet, dass**
der zumindest einen Abstützvorsprung (10) die Gegenfluidkanalöffnung (9) vollständig oder zumindest abschnittweise umläuft.

5. Vorrichtung (1) nach einem der vorhergehenden Ansprüche,
**dadurch gekennzeichnet, dass**
der zumindest eine Abstützvorsprung (10) einen langerstreckten, stegartigen Schmalkörper (17) aufweist, der sich entlang einer Erstreckungsbahn (18) über die Gegenbestückungsfläche (7) erstreckt.

6. Vorrichtung (1) nach Anspruch 5,
**dadurch gekennzeichnet, dass**
der Schmalkörper (17) in einer senkrecht auf der Gegenbestückungsfläche (7) stehenden Höhenrichtung (19) über die Gegenbestückungsfläche (7) erhaben ist und in einem unverformten Zustand in der Höhenrichtung (19) eine Höhe (20) aufweist, die größer 0mm kleiner gleich 1mm ist.

7. Vorrichtung (1) nach einem der vorhergehenden Ansprüche,
**dadurch gekennzeichnet, dass**
- das zumindest eine Dichtelement (11) zwischen dem zumindest einen Abstützvorsprung (10) und der Gegenfluidkanalöffnung (9) angeordnet ist, oder
- der zumindest eine Abstützvorsprung (10) zwischen dem zumindest einen Dichtelement (11) und der Gegenfluidkanalöffnung (9) angeordnet ist.

8. Vorrichtung (1) nach einem der vorhergehenden Ansprüche,
**dadurch gekennzeichnet, dass**
das Anbauteil (6) und/oder der zumindest eine Abstützvorsprung (10) aus einem elastischen Material, insbesondere aus Kunststoff oder Aluminium, hergestellt ist.

9. Fluidführende Einrichtung, insbesondere ein Ölmodul oder ein Fluidmodul, mit zumindest einer Vorrichtung (1), die gemäß den vorhergehenden Ansprüchen realisiert ist.

10. Einrichtung (21) eines Fahrzeugs, insbesondere ein Ölmodul oder ein Fluidmodul, mit zumindest einer Vorrichtung (1), die gemäß einem der Ansprüche 1-8 realisiert ist, wobei das Basisbauteil (2) der Vorrichtung (1) einen Antrieb des Fahrzeugs oder eine Antriebskomponente eines Antriebs des Fahrzeugs und das Anbauteil (6) der Vorrichtung (1) eine Ölwanne (22) oder eine Fluidwanne (22) des Fahrzeugs oder eine Komponente einer Ölwanne (22) oder einer Fluidwanne (22) des Fahrzeugs bildet.
